# FASCICULE DE BREVET EUROPEEN

(11) **EP 2 621 768 B1**
(45) Date de publication et mention de la délivrance du brevet: **06.12.2017**
(21) Numéro de dépôt: 11763918.7
(22) Date de dépôt: 28.09.2011
(51) Int. Cl.: B60R 25/00, H04L 29/06

(54) **PROCÉDÉ ET ENSEMBLE DE VERROUILLAGE/DÉVERROUILLAGE D'UN VÉHICULE AUTOMOBILE PAR TÉLÉPHONE MOBILE**
VERFAHREN UND GERÄT ZUM SPERREN / ENTSPERREN EINES KRAFTFAHRZEUGS DURCH EIN MOBILES TELEFON
PROCESS AND MEANS TO LOCK/UNLOCK A MOTOR VEHICLE BY MOBILE PHONE

(30) Priorité: 28.09.2010 FR 1003842
(43) Date de publication de la demande: 07.08.2013
(73) Titulaire: Valeo Securite Habitacle, 94046 Creteil (FR)
(72) Inventeur: PETEL, Laurent, F-94046 CRETEIL (FR)
(74) Mandataire: Pothmann, Karsten
(86) Numéro de dépôt international: PCT/EP2011/066823
(87) Numéro de publication internationale: WO 2012/041884

(56) Documents cités:
- CN-A- 101 319 586
- US-A1- 2008 034 422

## Description

L'invention concerne un procédé de verrouillage/déverrouillage et/ou de démarrage d'un véhicule automobile par téléphone mobile. L'invention concerne également un ensemble de verrouillage/déverrouillage et/ou de démarrage de véhicule automobile.

Une nouvelle catégorie de clés apparaît progressivement sur le marché. De telles clés sont basées sur une détection de la clé par le véhicule lorsque l'utilisateur s'en rapproche. Un calculateur utilise un émetteur placé dans le véhicule pour communiquer avec la clé disposée à proximité du véhicule. Lorsque le calculateur détermine que la clé présente est bien la clé qui lui est associée, il procède au déverrouillage des portières du véhicule. L'utilisateur peut alors accéder à l'habitacle du véhicule. Le calculateur permet également le démarrage du moteur, l'utilisateur pouvant alors démarrer le véhicule et l'utiliser à sa guise. Lorsque l'utilisateur quitte le véhicule avec la clé, le calculateur peut détecter son éloignement et procéder au verrouillage des portières.

La communication entre la clé et le véhicule peut être réalisée selon le protocole NFC (ou communication en champ proche pour Near Field Communication). Le NFC permet une liaison sans fil à courte portée, de l'ordre de quelques centimètres. Cette communication suppose une démarche volontaire de l'utilisateur et ne peut donc normalement pas être utilisée à son insu, ce qui apporte une garantie de sécurité.

On cherche aujourd'hui à développer ce type de moyen de verrouillage/déverrouillage et/ou de démarrage du véhicule sans contact tout en garantissant la sécurisation de la communication notamment vis-à-vis d'éventuelles tentatives de pirateries. L'art antérieur US2008/0034422 décrit un procédé pour verrouiller et déverrouiller un véhicule/bâtiment en recevant un mot de passe comme une longue séquence de nombres envoyée par un téléphone mobile, dans lequel la validité du mot de passe est déterminée par le propriétaire du verrou. Il n'y a aucune indication concernant l'établissement de la période de validité directement par le téléphone mobile au lieu du véhicule. A cet effet, l'invention a pour objet un procédé de verrouillage/déverrouillage et/ou de démarrage d'un véhicule automobile par un téléphone mobile, caractérisé en ce que ledit véhicule automobile et ledit téléphone mobile communiquent pour :
- authentifier ledit téléphone mobile comme apparié audit véhicule automobile pour le verrouillage/déverrouillage et/ou le démarrage,
- fournir au véhicule automobile une durée de validité dudit appariement du téléphone mobile,
et en ce que ledit téléphone mobile procède au verrouillage/déverrouillage et/ou au démarrage dudit véhicule automobile si ledit téléphone mobile est authentifié comme apparié audit véhicule automobile et si la date actuelle de demande de verrouillage/déverrouillage et/ou démarrage évaluée à partir d'une horloge de temps absolu dudit véhicule automobile est comprise dans la durée de validité.

Une fois authentifié comme apparié au véhicule automobile, le téléphone mobile agit comme une clé virtuelle temporelle permettant l'authentification de l'utilisateur pour le verrouillage/déverrouillage des ouvrants du véhicule, un accès à l'habitacle du véhicule et/ou le démarrage. Cette utilisation temporaire est particulièrement utilisée pour le verrouillage/déverrouillage et/ou le démarrage de véhicule automobile d'un parc de véhicules en partage (ou « car-sharing » en anglais). En octroyant le pouvoir de vérification de la validité de l'authentification du téléphone mobile au véhicule automobile, on garanti le respect de la durée de validité de l'authentification, en évitant notamment les tentatives de falsifications par piraterie du réseau téléphonique. On s'assure également de la fin de l'autorisation du verrouillage/déverrouillage et/ou du démarrage du véhicule par le téléphone mobile en dehors de la durée de validité, même lorsque le véhicule automobile est localisé dans une zone géographique non couverte par le réseau de téléphonie mobile.

Selon une ou plusieurs caractéristiques du procédé de verrouillage/déverrouillage et/ou de démarrage, prise seule ou en combinaison :
- ledit véhicule automobile et ledit téléphone mobile communiquent selon un protocole NFC,
- ledit véhicule automobile et ledit téléphone mobile communiquent selon un protocole bluetooth ou bluetooth low energy,
- l'horloge de temps absolu du véhicule automobile est reçue du bus réseau dudit véhicule,
- l'horloge de temps absolu du véhicule automobile est reçue d'un dispositif de navigation GPS dudit véhicule,
- le temps absolu dudit véhicule automobile comporte une date initiale en minutes incrémentant d'une unité de temps toutes les minutes et la durée de validité du téléphone mobile comporte une date de validité initiale et une période de validité en minutes.

L'invention a aussi pour objet un ensemble de verrouillage/déverrouillage et/ou de démarrage de véhicule automobile caractérisé en ce qu'il comporte :
- une unité de contrôle d'un téléphone mobile, ladite unité de contrôle comportant un moyen de communication avec un véhicule automobile pour verrouiller/déverrouiller et/ou démarrer ledit véhicule automobile une fois le téléphone mobile authentifié comme apparié audit véhicule automobile et pour envoyer au véhicule automobile une durée de validité de l'appariement,
- une unité de verrouillage/déverrouillage et/ou de démarrage du véhicule automobile comportant :
   - un moyen de communication avec ledit téléphone mobile pour authentifier ledit téléphone mobile comme apparié au véhicule automobile et pour recevoir la durée de validité dudit appariement,
   - un moyen de détermination de la date actuelle évaluée à partir d'une horloge de temps absolu dudit véhicule automobile,
   - un moyen de comparaison de la durée de validité avec la date actuelle, et
   - un moyen d'inhibition du verrouillage/déverrouillage et/ou du démarrage du véhicule automobile par le téléphone mobile si la date actuelle n'est pas comprise dans la durée de validité.

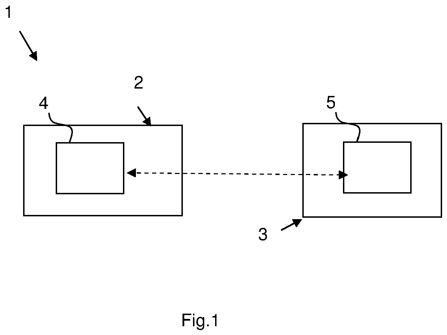

D'autres avantages et caractéristiques apparaîtront à la lecture de la description de l'invention donnée à titre d'exemple, ainsi que sur la figure unique annexée représentant une vue schématique d'un ensemble de verrouillage/déverrouillage et/ou de démarrage de véhicule automobile.

L'ensemble de verrouillage/déverrouillage et/ou de démarrage 1 représenté sur la figure comporte une unité de contrôle 5 d'un téléphone mobile 3 et une unité de verrouillage/déverrouillage et/ou de démarrage 4 d'un véhicule automobile 2.

L'unité de contrôle 5 du téléphone mobile 3 comporte un moyen de communication avec le véhicule automobile 2 pour verrouiller/déverrouiller et/ou démarrer le véhicule automobile 2 une fois le téléphone mobile 3 authentifié comme apparié au véhicule automobile 2 et pour envoyer au véhicule automobile 2 une durée de validité de l'authentification.

L'unité de verrouillage/déverrouillage et/ou de démarrage 4 du véhicule automobile 2 comporte également un moyen de communication avec le téléphone mobile 3 pour authentifier le téléphone mobile 3 comme apparié au véhicule automobile 2 et pour recevoir la durée de validité de l'appariement.

L'authentification du téléphone mobile 3 comme apparié au véhicule automobile 2 est réalisée par exemple par communication d'un code chiffré. Un autre moyen d'authentification consiste en une signature électronique ou message codé d'authentification (MAC) fait à partir d'un nombre aléatoire et une clé secrète, constante ou dérivée, à partir de tout ou partie du message d'identification préalablement reçu incluant ou non la plage de validité. Il est plus avantageux de l'inclure pour des raisons de sécurité

L'unité de verrouillage/déverrouillage et/ou de démarrage 4 comporte en outre un moyen de détermination de la date actuelle évaluée à partir d'une horloge de temps absolu du véhicule automobile 2, un moyen de comparaison de la durée de validité avec la date actuelle et un moyen d'inhibition du déverrouillage du véhicule automobile 2 par le téléphone mobile 3 si la date actuelle n'est pas comprise dans la durée de validité. Le moyen d'inhibition est par exemple une application qui change le code chiffré permettant l'authentification du téléphone mobile 3 apparié au véhicule automobile 2.

Les moyens de communication de l'unité de contrôle 5 du téléphone mobile 3 et de l'unité de verrouillage/déverrouillage et/ou de démarrage 4 du véhicule automobile 2 peuvent comporter une interface de communication NFC.

Le protocole NFC ou communication en champ proche (pour Near Field Communication) est une liaison sans fil à courte portée, de l'ordre de quelques centimètres qui utilise un protocole d'échanges de données basé sur des radiofréquences de très courte portée. Il s'agit d'une extension des techniques de radio-identification qui, tout en se basant sur la norme ISO/IEC 14443, permet la communication entre périphériques en mode pair à pair. Le protocole NFC est basé sur un couplage inductif et une modulation de charge au niveau d'un appareil esclave.

Au contraire d'autres techniques de radio-identification ou du Bluetooth dont la portée est d'une dizaine de mètres, la technique NFC est utilisable sur de très courtes distances, quelques centimètres. Elle suppose une démarche volontaire de l'utilisateur et ne peut donc normalement pas être utilisée à son insu, ce qui apporte une garantie de sécurité pour des transactions sensibles comme le déverrouillage d'un véhicule.

La technologie NFC est actuellement développée par un consortium industriel regroupé sous le nom de Forum NFC. La technologie NFC est dérivée de la technologie RFID (Radio Frequency Identification) et utilise des composants ou processeurs NFC présentant plusieurs modes de fonctionnement, notamment un mode lecteur et un mode émulation de carte.

En mode lecteur, un processeur NFC fonctionne comme un lecteur RFID conventionnel pour accéder en lecture ou écriture à une puce RFID. Le processeur NFC émet un champ magnétique, envoie des données par modulation de l'amplitude du champ magnétique et reçoit des données par modulation de charge et couplage inductif. Ce mode est également qualifié de mode actif car le processeur NFC émet un champ magnétique dans ce mode.

Dans le mode émulation, un processeur NFC fonctionne de façon passive à la manière d'un transpondeur pour dialoguer avec un autre lecteur et être vu par l'autre lecteur comme une puce RFID. Le processeur n'émet pas de champ magnétique, reçoit des données en démodulant un champ magnétique émis par l'autre lecteur et émet des données par modulation de l'impédance de son circuit d'antenne (modulation de charge). Ce mode est également qualifié de mode passif, car le processeur NFC n'émet pas de champ magnétique dans ce mode.

D'autres modes de communication peuvent être mis en oeuvre, notamment un mode dit "device" où un composant doit s'apparier avec un autre processeur NFC se trouvant dans le même mode de fonctionnement, chaque processeur NFC se place alternativement dans un état passif (sans émission de champ) pour recevoir des données et dans un état actif (avec émission de champ) pour émettre des données.

Dans ces trois modes de fonctionnement, un processeur NFC peut mettre en oeuvre plusieurs protocoles de communication sans contact par exemple ISO 14443-A, ISO 14443-B ou ISO 15693. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif.

Un certain nombre de normes définissent le protocole NFC :
- NFCIP-1 (ISO/IEC 18092) définit l'interface et le protocole de communication entre deux périphériques NFC;
- ISO/IEC 14443-1 à ISO/IEC 14443-4 définissent la communication avec des circuits intégrés sans contact;
- NDEF (NFC Data Exchange Format) définit le format d'échange logique des données.

La communication NFC présente généralement les caractéristiques suivantes :
- Débits de communication : 106, 212, 424 ou 848 kbit/s ;
- Gamme de fréquence : 13,56 MHz ;
- Distance de communication : environ 10 cm ;
- Mode de communication : half-duplex ou full-duplex ;

Le véhicule automobile 2 et le téléphone mobile 3 communiquent pour :
- authentifier le téléphone mobile 3 comme apparié au véhicule automobile 2 pour le verrouillage/déverrouillage,
- fournir au véhicule automobile 2 une durée de validité de l'appariement du téléphone mobile 3.

En outre, le téléphone mobile 3 verrouille/déverrouille et/ou démarre le véhicule automobile 2 si le téléphone mobile 3 est authentifié comme apparié au véhicule automobile 2 et si la date actuelle de demande de verrouillage/déverrouillage et/ou de démarrage évaluée à partir d'une horloge de temps absolu du véhicule automobile 2 est comprise dans la durée de validité.

Ainsi, une fois authentifié comme apparié au véhicule automobile 2, le téléphone mobile 3 agit comme une clé virtuelle temporelle permettant l'authentification de l'utilisateur pour le verrouillage/déverrouillage des ouvrants du véhicule, un accès à l'habitacle du véhicule et/ou le démarrage. Le verrouillage du véhicule 2 peut être réalisé automatiquement lorsque l'utilisateur s'éloigne du véhicule.

L'horloge de temps absolu du véhicule automobile 2 est par exemple fournie de manière autonome par le calculateur de verrouillage/déverrouillage et/ou de démarrage du véhicule ou obtenue à partir d'un bus réseau type CAN, flexray, LIN ou MOST équipant ledit véhicule.

Alternativement, l'horloge de temps absolu du véhicule automobile 2 peut être reçue d'un dispositif de navigation GPS du véhicule.

Le temps absolu du véhicule automobile 2 comporte par exemple une date initiale en minutes incrémentant d'une unité de temps toutes les minutes. La date initiale est par exemple le 1^{er} janvier 2010 à 00h00. La plage temporelle de validité du téléphone mobile 3 comporte alors une date de validité initiale et une durée de validité en minutes ou une date de validité finale en minute. Par exemple, la date de validité initiale est le 22 septembre 2010 à 00h00 et la période de validité est de 2880 minutes. L'appariement du téléphone mobile est donc valide du 22 septembre 2010 à 00h00 jusqu'au 24 septembre 2010 à 00h00, c'est-à-dire qu'après le 24 septembre 2010, une fois que le conducteur a quitté le véhicule automobile 2 et que celui-ci s'est verrouillé, le téléphone mobile 3 ne peut plus être authentifié comme apparié au véhicule automobile 2 et donc, ne peut plus le déverrouiller. En définissant une plage temporelle infinie on obtient une validité permanente pour le téléphone.

De manière alternative l'incrément temporelle peut être des heures, des demi-journées, des journées, des mois etc.

Cette utilisation temporaire est particulièrement utilisée pour le verrouillage/déverrouillage et/ou le démarrage de véhicule automobile d'un parc de véhicules en partage (ou « car-sharing » en anglais). En octroyant le pouvoir de vérification de la validité de l'authentification du téléphone mobile 3 au véhicule automobile 2, on garanti le respect de la durée de validité de l'authentification, en évitant notamment les tentatives de falsifications par piraterie du réseau téléphonique. On s'assure également de la fin de l'autorisation du verrouillage/déverrouillage et/ou du démarrage du véhicule 2 par le téléphone mobile 3 en dehors de la durée de validité, même lorsque le véhicule automobile est localisé dans une zone géographique non couverte par le réseau de téléphonie mobile.

Dans un autre mode de réalisation, le véhicule et le téléphone mobile communique par bluetooth ou bluetooth low energy, ou par double mode de communication NFC et bluetooth.

## Revendications

1. Procédé de verrouillage/déverrouillage et/ou de démarrage d'un véhicule automobile (2) par un téléphone mobile (3), dans lequel ledit véhicule automobile (2) et ledit téléphone mobile (3) communiquent pour :
- authentifier ledit téléphone mobile (3) comme apparié audit véhicule automobile (2) pour le verrouillage/déverrouillage et/ou le démarrage,
- fournir au véhicule automobile (2) une durée de validité dudit appariement du téléphone mobile (3),
et dans lequel ledit téléphone mobile (3) verrouille/déverrouille et/ou démarre ledit véhicule automobile (2) si ledit téléphone mobile (3) est authentifié comme apparié audit véhicule automobile (2) et si la date actuelle de demande de déverrouillage évaluée à partir d'une horloge de temps absolu dudit véhicule automobile (2) est comprise dans la durée de validité.

2. Procédé de verrouillage/déverrouillage et/ou de démarrage selon la revendication 1, **caractérisé en ce que** ledit véhicule automobile (2) et ledit téléphone mobile (3) communiquent selon un protocole NFC.

3. Procédé de verrouillage/déverrouillage et/ou de démarrage selon la revendication 1, **caractérisé en ce que** ledit véhicule automobile (2) et ledit téléphone mobile (3) communiquent selon un protocole bluetooth ou bluetooth low energy.

4. Procédé de verrouillage/déverrouillage et/ou de démarrage selon l'une des revendications 1 ou 2, **caractérisé en ce que** l'horloge de temps absolu du véhicule automobile (2) est reçue du bus réseau dudit véhicule.

5. Procédé de verrouillage/déverrouillage et/ou de démarrage selon l'une des revendications 1 ou 2, **caractérisé en ce que** l'horloge de temps absolu du véhicule automobile (2) est reçue d'un dispositif de navigation GPS dudit véhicule.

6. Procédé de verrouillage/déverrouillage et/ou de démarrage selon l'une des revendications 1 à 4, **caractérisé en ce que** le temps absolu dudit véhicule automobile (2) comporte une date initiale en minutes incrémentant d'une unité de temps toutes les minutes et **en ce que** la durée de validité du téléphone mobile (3) comporte une date de validité initiale et une période de validité en minutes.

7. Ensemble de verrouillage/déverrouillage et/ou de démarrage de véhicule automobile comportant:
- une unité de contrôle (5) d'un téléphone mobile (3), ladite unité de contrôle (5) comportant un moyen de communication avec un véhicule automobile (2) pour verrouiller/déverrouiller et/ou démarrer ledit véhicule automobile (2) une fois le téléphone mobile (3) authentifié comme apparié audit véhicule automobile (2) et pour envoyer au véhicule automobile (2) une durée de validité de l'appariement,
- une unité de verrouillage/déverrouillage et/ou de démarrage (4) du véhicule automobile (2) comportant :
- un moyen de communication avec ledit téléphone mobile (3) pour authentifier ledit téléphone mobile (3) comme apparié au véhicule automobile (2) et pour recevoir la durée de validité dudit appariement,
- un moyen de détermination de la date actuelle évaluée à partir d'une horloge de temps absolu dudit véhicule automobile (2),
- un moyen de comparaison de la durée de validité avec la date actuelle, et
- un moyen d'inhibition du déverrouillage du véhicule automobile (2) par le téléphone mobile (3) si la date actuelle n'est pas comprise dans la durée de validité.

## Patentansprüche

1. Verfahren zum Sperren/Entsperren und/oder Starten eines Kraftfahrzeugs (2) durch ein Mobiltelefon (3), wobei das Kraftfahrzeug (2) und das Mobiltelefon (3) kommunizieren, um:
- das Mobiltelefon (3) als dem Kraftfahrzeug (2) für das Sperren/Entsperren und/oder Starten zugeordnet zu authentifizieren,
- um eine Gültigkeitsdauer der Zuordnung des Mobiltelefons (3) zu dem Kraftfahrzeug (2) zu übermitteln,
und wobei das Mobiltelefon (3) das Kraftfahrzeug (2) sperrt/entsperrt und/oder startet, wenn das Mobiltelefon (3) als dem Kraftfahrzeug (2) zugeordnet authentifiziert ist und wenn das aktuelle Datum der Entsperrungsanfrage, das anhand einer Absolutzeituhr des Kraftfahrzeugs (2) bewertet wird, in der Gültigkeitsdauer enthalten ist.

2. Verfahren zum Sperren/Entsperren und/oder Starten nach Anspruch 1, **dadurch gekennzeichnet, dass** das Kraftfahrzeug (2) und das Mobiltelefon (3) gemäß einem NFC-Protokoll kommunizieren.

3. Verfahren zum Sperren/Entsperren und/oder Starten nach Anspruch 1, **dadurch gekennzeichnet, dass** das Kraftfahrzeug (2) und das Mobiltelefon (3) gemäß einem Bluetooth- oder Bluetooth-Low-Energy-Protokoll kommunizieren.

4. Verfahren zum Sperren/Entsperren und/oder Starten nach einem der Ansprüche 1 oder 2, **dadurch gekennzeichnet, dass** die Absolutzeituhr des Kraftfahrzeugs (2) von dem Netzwerkbus des Fahrzeugs empfangen wird.

5. Verfahren zum Sperren/Entsperren und/oder Starten nach einem der Ansprüche 1 oder 2, **dadurch gekennzeichnet, dass** die Absolutzeituhr des Kraftfahrzeugs (2) von einer GPS-Navigationsvorrichtung des Fahrzeugs empfangen wird.

6. Verfahren zum Sperren/Entsperren und/oder Starten nach einem der Ansprüche 1 bis 4, **dadurch gekennzeichnet, dass** die Absolutzeit des Kraftfahrzeugs (2) ein Anfangsdatum in Minuten umfasst, das jede Minute um eine Zeiteinheit inkrementiert, und dadurch, dass die Gültigkeitsdauer des Mobiltelefons (3) ein Anfangsgültigkeitsdatum und eine Gültigkeitsdauer in Minuten umfasst.

7. Anordnung zum Sperren/Entsperren und/oder Starten eines Kraftfahrzeugs, umfassend:
- eine Steuereinheit (5) eines Mobiltelefons (3), wobei die Steuereinheit (5) ein Mittel zur Kommunikation mit einem Kraftfahrzeug (2) umfasst, um das Kraftfahrzeug (2) zu sperren/entsperren und/oder zu starten, wenn das Mobiltelefon (3) als dem Kraftfahrzeug (2) zugeordnet authentifiziert ist, und um eine Gültigkeitsdauer der Zuordnung an das Kraftfahrzeug (2) zu übermitteln,
- eine Einheit zum Sperren/Entsperren und/oder Starten (4) des Kraftfahrzeugs, (2) umfassend:
- ein Mittel zur Kommunikation dem Mobiltelefon (3), um das Mobiltelefon (3) als dem Kraftfahrzeug (2) zugeordnet zu authentifizieren und um die Gültigkeitsdauer der Zuordnung zu empfangen,
- ein Mittel zum Ermitteln des aktuellen Datums, das anhand einer Absolutzeituhr des Kraftfahrzeugs (2) ausgewertet ist,
- ein Mittel zum Vergleichen der Gültigkeitsdauer mit dem aktuellen Datum, und
- ein Mittel zum Verhindern des Entsperrens des Kraftfahrzeugs (2) durch das Mobiltelefon (3), wenn das aktuelle Datum nicht in der Gültigkeitsdauer enthalten ist.

## Claims

1. Method for locking/unlocking and/or starting a motor vehicle (2) using a mobile telephone (3), wherein said motor vehicle (2) and said mobile telephone (3) communicate in order to:
- authenticate said mobile telephone (3) as being paired with said motor vehicle (2) for the locking/unlocking and/or the starting,
- provide the motor vehicle (2) with a validity period of said pairing of the mobile telephone (3),
and wherein said mobile telephone (3) locks/unlocks and/or starts said motor vehicle (2) if said mobile telephone (3) is authenticated as being paired with said motor vehicle (2) and if the current unlocking request date, evaluated on the basis of an absolute time clock of said motor vehicle (2), is within the validity period.

2. Locking/unlocking and/or starting method according to Claim 1, **characterized in that** said motor vehicle (2) and said mobile telephone (3) communicate in accordance with an NFC protocol.

3. Locking/unlocking and/or starting method according to Claim 1, **characterized in that** said motor vehicle (2) and said mobile telephone (3) communicate in accordance with a Bluetooth or Bluetooth Low Energy protocol.

4. Locking/unlocking and/or starting method according to either of Claims 1 and 2, **characterized in that** the absolute time clock of the motor vehicle (2) is received from the network bus of said vehicle.

5. Locking/unlocking and/or starting method according to either of Claims 1 and 2, **characterized in that** the absolute time clock of the motor vehicle (2) is received from a GPS navigation device of said vehicle.

6. Locking/unlocking and/or starting method according to one of Claims 1 to 4, **characterized in that** the absolute time of said motor vehicle (2) includes an initial date in minutes, incrementing by a unit of time every minute, and **in that** the validity period of the mobile telephone (3) includes an initial validity date and a period of validity in minutes.

7. Assembly for locking/unlocking and/or starting a motor vehicle, including:
- a mobile telephone (3) control unit (5), said control unit (5) including a means for communicating with a motor vehicle (2) in order to lock/unlock and/or start said motor vehicle (2) once the mobile telephone (3) has been authenticated as being paired with said motor vehicle (2) and in order to send, to the motor vehicle (2), a validity period of the pairing,
- a unit (4) for locking/unlocking and/or starting the motor vehicle (2), including:
- a means for communicating with said mobile telephone (3) in order to authenticate said mobile telephone (3) as being paired with the motor vehicle (2) and in order to receive the validity period of said pairing,
- a means for determining the current date, evaluated on the basis of an absolute time clock of said motor vehicle (2),
- a means for comparing the validity period with the current date, and
- a means for preventing the unlocking of the motor vehicle (2) using the mobile telephone (3) if the current date is not within the validity period.
